# EUROPEAN PATENT APPLICATION

(11) **EP 1 244 263 A2**
(43) Date of publication of application: **25.09.2002**
(21) Application number: 01117481.0
(22) Date of filing: 19.07.2001
(51) Int. Cl.: H04L 29/06

(54) **Access control method**

(30) Priority: 20.10.2000 JP 2000320645
(71) Applicant: Hitachi, Ltd., Chiyoda-ku, Tokyo 101-8010 (JP)
(72) Inventor: Honjo, Shinsuke, c/o Hitachi, Ltd., Chiyoda-ku, Tokyo 100-8220 (JP); Susaki, Seiichi, c/o Hitachi, Ltd., Chiyoda-ku, Tokyo 100-8220 (JP)
(74) Representative: Strehl Schübel-Hopf & Partner

(57) **Abstract**

In an access control method for use with a system including a client (20), a www server (30), and a ticket granting server (10), the www server has a server policy (31) defining an access allowance condition and sends a server policy to the client having requested an access. The ticket granting server obtains, in response to a request and the server policy sent from the client, personal information from a personal information database (11), authenticates the personal information, and sends it as a ticket (12) to the client. The client sends an access request with the ticket to the www server. The www server allows the client the access when the ticket matches the server policy.

## Description

### BACKGROUND OF THE INVENTION

The present invention relates to a personal information authentication method enabling access control using reliable personal information while keeping the personal information secret and a method of controlling accesses according to the personal information.

For personal authentication, there have been used an authentication method employing a user identifier and/or a password or a method using a public-key cryptosystem or, such as, a secure socket layer (SSL).

The authentication method employing a user identifier and/or a password includes a method in which matching between beforehand registered user identifier/ password and input identifier/password is verified and a method in which a secret key is created using a user identifier and a password and possession of the secret key is proved so as to achieve the verification.

In the public-key cryptosystem, a key used in the encryption system differs from a key used to decript an encrypted key, and the decryption key is kept secret and the encryption key is set as a public key.

Authentication in the public-key cryptosystem is achieved by proving possession of the encryption key in some manners.

The encryption key set as a public key is stored in a public key certificate together with information such as a name, an organization name, and an expiration date of validity. By referring to the public key certificate, necessary information of a person to be authenticated can be obtained.

However, the authentication/access method of the prior art is attended with problems as follows.
1) Personal information of the user is known to the pertinent system. That is, for the authentication technique, it is natural that the personal information of the user is required for authentication. However, when a person desires to make an anonymous contribute or to write a message on a bulletin board with the personal information kept secret, it is necessary to access the pertinent system with the personal information kept secret. In this situation, the person cannot be authenticated in the method of the prior art.
2) User registration is required. That is, it is necessary that users who can access the system are beforehand determined. However, although it is required to exactly confirm the personal information of the users, there occurs a case in which the user desires to keep his or her personal information secret when accessing the system.
3) Allowance for the user access is controlled in a centralized method. That is, on the authentication side, only the user identifier registered to the system is verified to determine whether or not the user is allowed to access the system. However, on the user side, it is desired to use other information as material to determine the access allowance.

For example, when it is desired to construct a bulletin board which only women are allowed to access, authorization is required only for the gender. When it is desired to construct a site for the adult who is at least 18 years old, authorization is required only for the age, that is, the user is at least 18 years old. When a user desires to make an anonymous contribution, it is necessary for the side to be accessed to identify the person when the contribution causes a problem of slander or the like. It is only required in this situation that there exists a method, when contribution is made several times with an anonymous handle name, to guarantee that each contribution is actually made by the same sender.

However, in the authentication technique of the prior art, neither authorization of only the gender nor authorization of only the age is possible. Furthermore, impersonation is possible in the prior art.

### SUMMARY OF THE INVENTION

It is therefore an object of the present invention, which has been devised to solve the problem, to provide a personal information authentication method enabling access control using reliable personal information by keeping the personal information secret, an access control system according to the personal information.

To achieve the object according to the present invention, there is provided an access control method for use in a system including a client, a www server, and a ticket granting server. The www server having a server policy defining an access allowance condition sends the server policy to a client having requested an access. The ticket granting server obtains, in response to a request and the server policy received from a client, personal information from a personal information database, and authenticates the personal information, and resultantly sends a ticket to the client. The client sends an access request with the ticket to the www server. The www server allows the client to access when the ticket matches the server policy.

### BRIEF DESCRIPTION OF THE DRAWINGS

The present invention will be more apparent from the following detailed description, when taken in conjunction with the accompanying drawings, in which:
Fig. 1 is an explanatory diagram showing a principle of access control according to the present invention;
Fig. 2 is an explanatory diagram showing a principle of a solution for an unauthorized writing attempt according to the present invention;
Fig. 3 is an explanatory diagram showing a principle of access control by the gender according to the present invention;
Fig. 4 is a configuration diagram of a network in embodiment 1 according to the present invention;
Fig. 5 is a block diagram showing constitution of a client in Fig. 4;
Fig. 6 is a block diagram showing constitution of a ticket granting server in Fig. 4;
Fig. 7 is a block diagram showing constitution of World Wide Web (WWW) server in Fig. 4;
Fig. 8 is a diagram of a data layout of a personal information database in embodiment 1 according to the present invention;
Fig. 9 is a diagram of a data configuration of a server policy in embodiment 1 according to the present invention;
Fig. 10 is a diagram of a data configuration of a ticket in embodiment 1 according to the present invention;
Fig. 11 is a sequential chart of a first operation in embodiment 1 according to the present invention;
Fig. 12 is a sequential chart showing a second and subsequent operations;
Fig. 13 is a flowchart showing processing of a client in embodiment 1 of the present invention;
Fig. 14 is a flowchart showing processing of a WWW server in embodiment 1 of the present invention;
Fig. 15 is a flowchart showing processing of a ticket granting server in embodiment 1 of the present invention;
Fig. 16 is a diagram of a data configuration of a ticket in embodiment 2 according to the present invention;
Fig. 17 is an explanatory diagram of authenticator creation and verification in embodiment 2 of the present invention;
Fig. 18 is a sequential chart of a first operation in embodiment 2 of the present invention;
Fig. 19 is a flowchart showing processing of a client in embodiment 2 of the present invention;
Fig. 20 is a flowchart showing processing of a WWW server in embodiment 2 of the present invention;
Fig. 21 is a flowchart showing processing of a ticket granting server in embodiment 2 of the present invention;
Fig. 22 is a flowchart showing detailed processing in embodiment 2 of the present invention; and
Fig. 23 is a sequential chart of processing when another authenticator is used.

### DESCRIPTION OF THE EMBODIMENTS

Referring to the accompanying drawings, description will be given in detail of the principle and embodiments of the present invention.

### 1. Principle

In the present invention, authentication or an access control method is achieved as follows.
1) Personal information is registered to a third party authority.
2) A server policy describing pertinent conditions are set to a server which conducts access control. The server policy has contents of description including items such as an objective directory, necessary information (a name and a birthday), a level to disclose information (description of the name required?), and requirement/non-requirement of authorization (whether or not is information to be authorized?). For example, "http://www.abc.com/cgi-bin/abc (name, disclosure not required, authorization required), (birthday, disclosure required, authorization required)".
3) The user requests granting of a ticket for the authorization of necessary information by the third party authority. The ticket has contents, for example, as follows.
   Name: Not disclosed; authorized
   Birthday: Sep. 17, 1969; authorized
   Third party authority: ABC
4) The user presents the ticket to the server. The server collates the contents of the ticket with the server policy to determine whether or not the access is possible.
   In this example, since the name has been authorized by the third party authority and the birthday is disclosed and authorized, the server allows the access.
5) Particularly, when a problem occurs after an anonymous access is allowed, a person suffered from the anonymous access or an arbitrator such as a court notifies via the bulletin board of the server to the server that a message of the sender contains inappropriate lines. The server makes an enquiry to the third party authority for information described on the ticket. The third party authority identifies the sender, takes a predetermined operation, for example, to send a warning message to the identified sender, and sends a message of the condition or information of the sender to, for example, the arbitrator. The third party authority is typically a certification authority (CA).

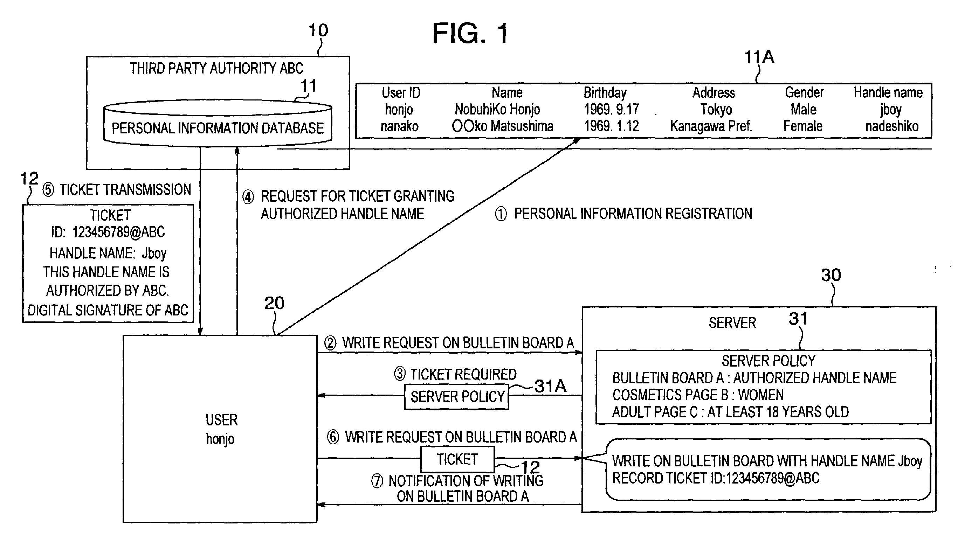

Fig. 1 is a diagram to explain the principle of the present invention, specifically, access control with an authorized handle name.

The configuration of Fig. 1 includes a reliable third party authority 10 having a personal information database 11. The database 11 has contents 11A registered thereto. The configuration further includes a user (honjo in this example) 20, ticket contents 12 granted by the authority 10, a server, i.e., a WWW server 30 to control accesses, contents of a server policy 31, and transmitted contents of the server policy 31A.

The processing procedure will be now described in a sequence of ① to ⑦. First, ① the user 20 registers personal information to the third party authority ABC 12. The personal information includes, for example, a user identifier (ID), a name, a birthday, an address, gender, and a handle name. Next, ② the user 20 sends a write request on a bulletin board A to the server 30.

The access control server 30 has a server policy 31 including "bulletin board A: access with an authorized handle name", "cosmetics page B: to be accessed only by women", "adult page C: to be accessed only by persons of at least 18 years old. ③ The server 30 sends, in response to the write request on the bulletin board A from the user 20, the server policy contents 31A and a message that a ticket is required.

④ The user 20 sends a request for "ticket granting" (with an authorized handle name) to the authority ABC 10. ⑤ The authority ABC 10 refers, in response to the ticket granting request", to the contents of the personal information database 11 and then sends a ticket 12 to the user. The ticket has contents such as a ticket identifier, a description that the handle name (Jboy) has been authorized by the third party authority ABC 10, and a digital signature by the authority ABC 10 to prevent substitution.

⑥ The user 20 sends a write request on the board A with the received ticket 12 to the access control server 30. ⑦ The control server 30 verifies the ticket 12, confirms the access, and then returns a message.

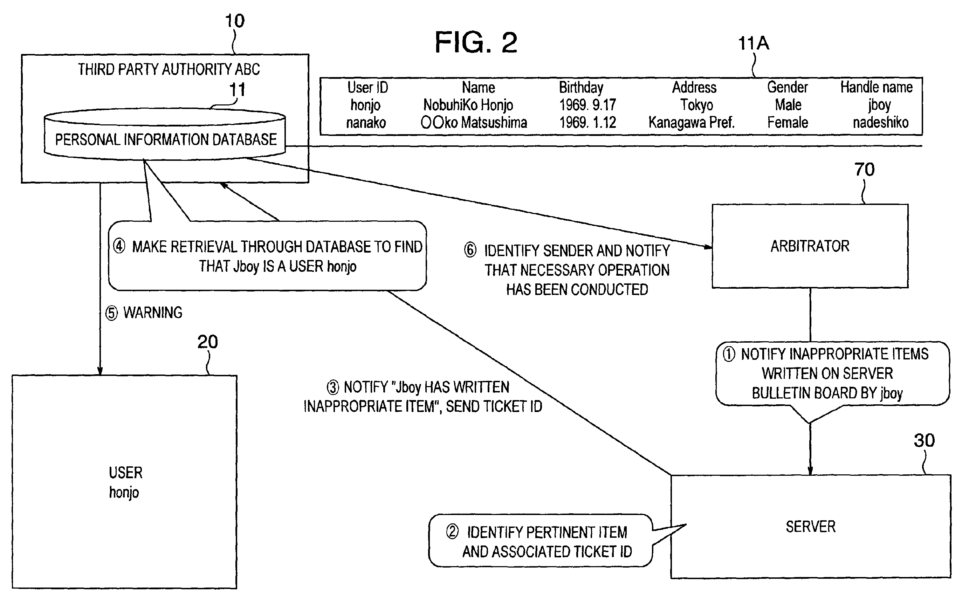

Fig. 2 shows a procedure for an inappropriate writing operation in the access control with an authorized handle name.

In the procedure of Fig. 1, when the handle name Jboy writes an inappropriate item on the bulletin board, for example, writes a slander of another person or writes his or her resolution to conduct a serious illegal act, ① a sufferer of the act or an arbitrator such as a court 70 notifies the server 30 that an inappropriate item written by Jboy exists on the servers bulletin board. ② The access control server 30 identifies the pertinent item and an associated ticket identifier. ③ The server 30 notifies the third party authority ABC 10 that Jboy has written an inappropriate item on the board and then sends the ticket identifier to the authority ABC 10. ④ The third party authority ABC 10 makes retrieval through the personal information database 11 to recognize that Jboy is the user honjo. ⑤ The third party authority ABC 10 sends a warning message to the user 20. ⑥ The authority ABC 10 identifies the sender and then notifies the sufferer or arbitrator 70 that an appropriate operation has been conducted for the sender. Depending on situations, the authority ABC 10 supplies information of the sender to the arbitrator when necessary.

As a result, even when the personal information is kept secret on the internet, the personal information regarding essential personal items such as a name and a birthday can be guaranteed. This consequently minimizes irresponsible acts and crimes.

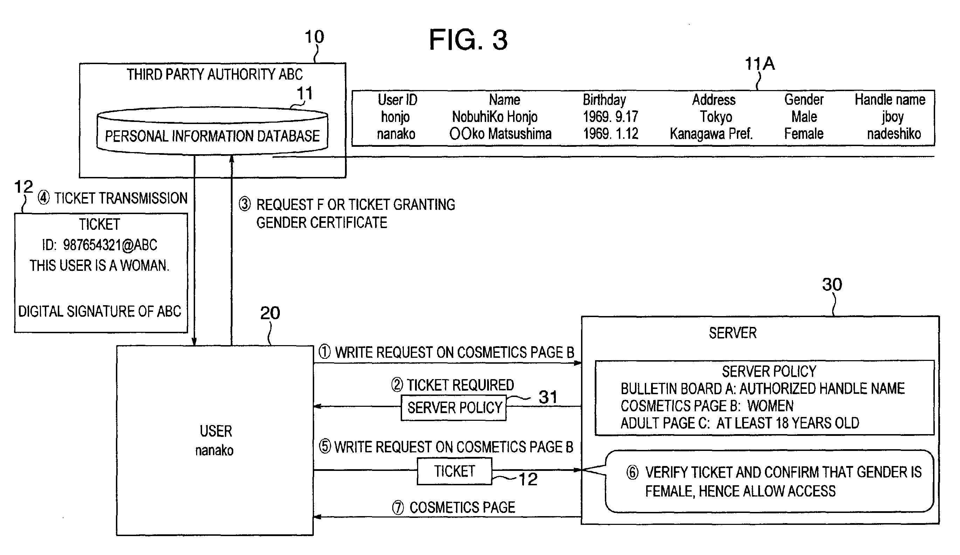

Fig. 3 shows the principle of the present invention, specifically, access control according to information of gender.

① The user 20 sends a write request on the cosmetics page B to the server 30. ② The server 20 sends the user 20 that there exists a service policy 31 "the cosmetics page B can be accessed only by women" and information that "a ticket is necessary". ③ The user 20 sends a request for "ticket granting" (certification of gender) to the authority ABC 10. ④ The authority ABC 10 refers, in response to the request, to the contents of the personal information database 11 and grants and sends a ticket 12 to the user 20. Described on the ticket 12 are ticket ID, "the user is female" and a digital signature by the authority ABC 10. ⑤ The user 20 sends a write request on the cosmetics page B with the ticket 12 to the server 30. ⑥ The server 30 verifies the ticket 12, recognizes that the user is female, and allows the access. ⑦ The user 20 sends the cosmetics page B to the user 20. When the access is rejected or denied, an error message is sent, namely, the cosmetics page is not sent.

### 2. Embodiment 1

### 2.1 Network configuration

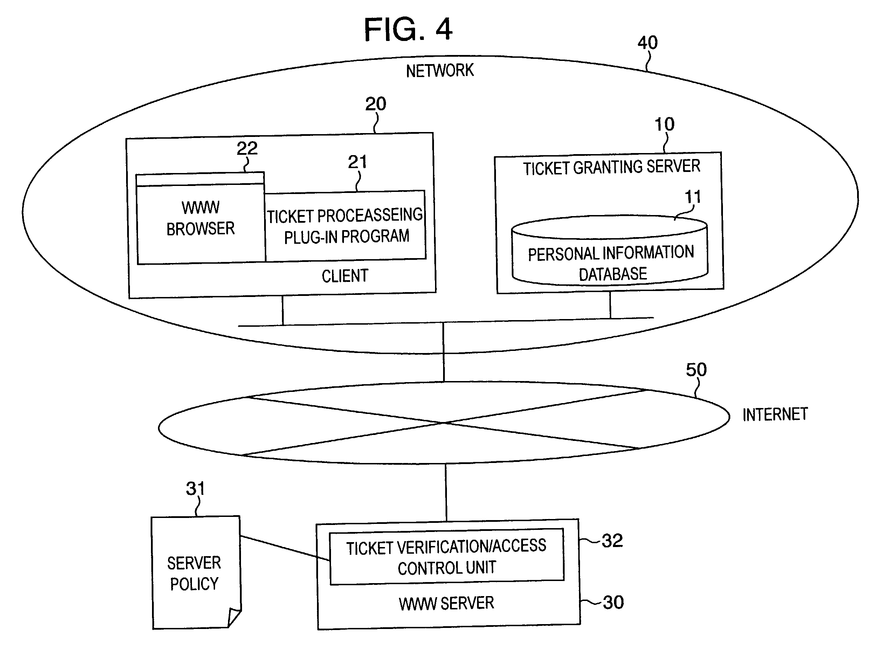

Fig. 4 shows a configuration of a network in embodiment 1 of the present invention.

The configuration of Fig. 4 includes a network 40 (a so-called intra-network) which is a private and closed network of a firm, a university, or the like, an internet 50, and a www server 30 connected to the internet 50. The system further includes a ticket granting server 10 including a personal information database 11. It is favorable in this case, for example, that a personnel section of the firm possessing the personal information is the ticket granting server. Included in the configuration is also a client 20 of which a www browser 22 additionally includes a ticket processing plug-in program 21. The www server 30 includes a server policy 31 and a ticket verification/access control unit 32. The ticket processing plug-in program 21 of the client 20 and the ticket verification/access control unit 32 primarily execute processing for the ticket.

In this connection, in a case in which a public office of a city or a village or an organization which possesses personal information becomes the ticket granting server 10 in future, the server 10 can be directly connected to the internet 50 without installing the closed network 40. It is also possible to dispose a plurality of clients, www servers, and ticket granting servers.

### 2.2 Client configuration

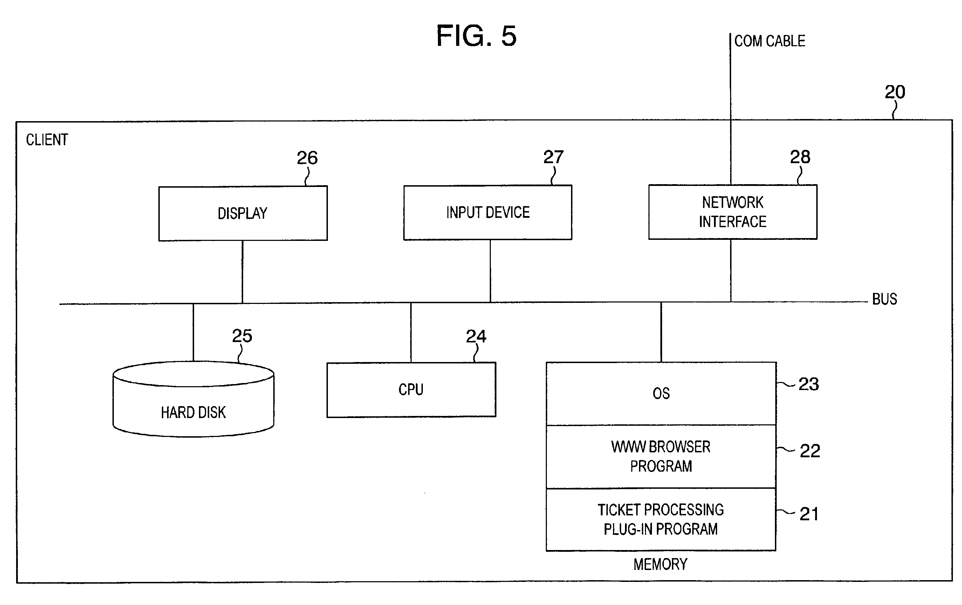

Fig. 5 shows in detail the configuration of the client 20 in Fig. 4.

The client (terminal) 20 is connected via a communication cable to the internet and is connected via a network interface 28 to a main bus. The main bus is connected to a central processing unit (CPU) 24 to control the overall terminal operation, a main memory to store programs and the like, a hard disk 25 as an external memory, a display 26 to display, for example, various information of the internet, and an input device 27 such as a mouse. The main memory stores an operating system (OS) 23, a www browser program 22, and a ticket processing plug-in program 21.

As in this example, the program for the ticket processing may be implemented as plug-in software of the www browser program 22. It may also be implemented as part of a communication control program.

The ticket processing plug-in program 21 transmits a ticket granting request to the third party authority 10 and sends a ticket to the www server 30. The program 21 may have a function to modify/register some less important personal information items in the database 11 of the ticket granting server 10, the information items not requiring authorization such as a division of firm to which the pertinent person belongs.

### 2.3 Configuration of ticket granting server

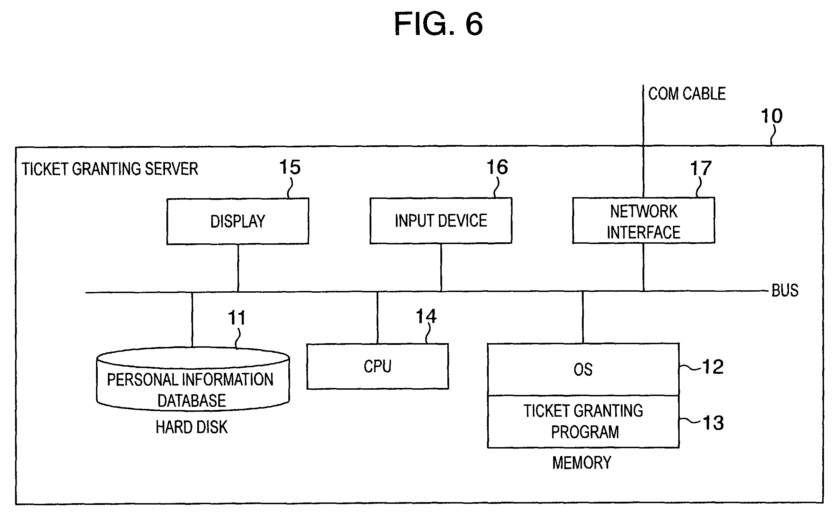

Fig. 6 shows in detail the configuration of the ticket granting server regarding the third party authority.

The server 10 is connected via a communication cable to the internet and is connected via a network interface 17 to a main bus.

The main bus is connected to a CPU 14 to control the overall operation of the server 10, a main memory to store programs and the like, a hard disk 11 as an external memory to store a personal information database, a display 15, and an input device 16. The main memory stores an operating system 12 and a ticket granting program 13. Having received a ticket granting request via the communication cable, the program 13 automatically describes, on a ticket, at least one personal information item and information of attributes regarding the personal information items and grants the ticket on which a digital signature of the third party authority as the ticket issuer is described.

### 2.4 Configuration of www server

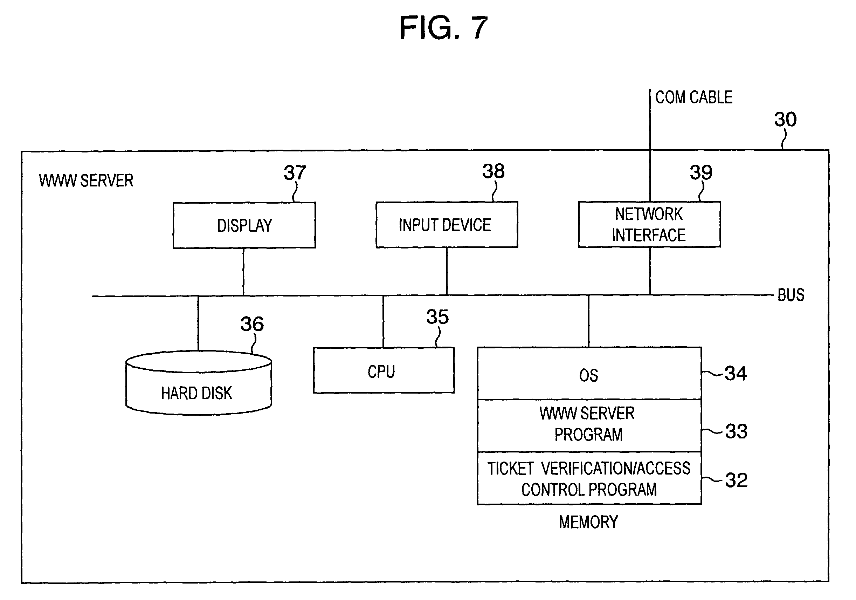

Fig. 7 shows a detailed configuration of the www server 30 in Fig. 4.

The (access control) server 30 is connected via a communication cable to the internet and is connected via a network interface 39 to a main bus.

The main bus is connected to a CPU 35 to control the overall operation of the server 30, a main memory to store programs and the like, a display 37, and an input device 38. The main memory stores an operating system 34, a www server program 33, and a ticket verification/access control program 32. Having received an access request via the communication cable, for example, to write a message on a bulletin board, the program 32 conducts verification/access control for the request.

### 2.5 Personal information database

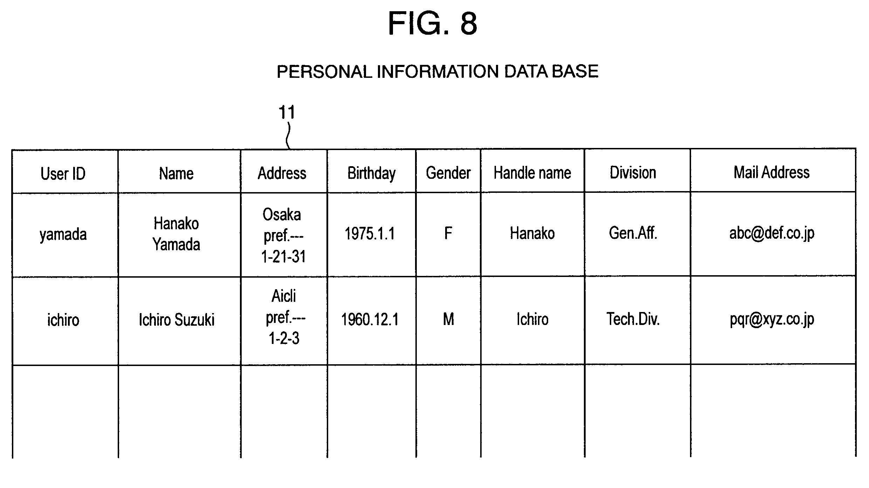

Fig. 8 shows an example of a data layout in the personal information database 11 of the ticket granting server 10.

As shown in Fig. 8, the database 11 includes such items as a user ID, a name, a place to make contact (an address), a birth day, gender, a handle name, a division to which the user belongs, and a mail address. The database 11 may also include other item, for example, information items for the authentication of a person such as a password or biometrics.

These items are classified into two types. Items of first type are important and require authorization of a third party authority and items of second type are less important and do not require the authorization. The items of first type are examined by the third party authority. For example, reports and/or papers regarding these items are examined before the items are registered to the database 11. Information of the items of second type can be registered and modified via the network by the pertinent person.

### 2.6 Server policy

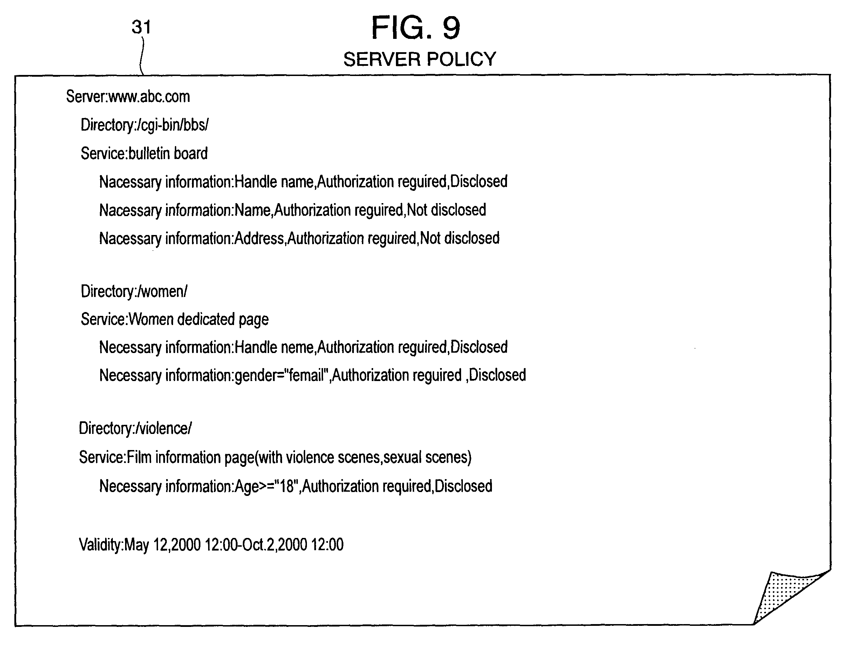

Fig. 9 shows examples of contents of the server policy 31.

Fig. 9 shows three examples of the server policy of the server www.abc.com.
1) Service: Bulletin board
   Necessary information: Handle name, authorization required, disclosed
   Necessary information: Name, authorization required, not disclosed
   Necessary information: Address for contact, authorization required, not disclosed
   (Necessary information for accessing this bulletin board includes a handle name to be authorized and to be disclosed, a name to be authorized and not to be disclosed, and an address for contact to be authorized.)
2) Service: Women dedicated page
   Necessary information: Handle name, authorization required, disclosed
   Necessary information: Gender = 'Female', authorization required, disclosed
   (Necessary information for accessing this page includes a handle name to be authorized and to be disclosed and information of gender 'female' to be authorized and to be disclosed.)
3) Service: Film information page (with violence scenes and sexual scenes)
   Necessary information: Age ≧ '18', authorization required,
   (Necessary information for accessing this page includes information of age to be authorized and to be disclosed.)

The server policy 31 can be described in the extensible markup language (XML). However, the server policy 31 may be described in other ways, for example, using the abstract syntax notation one (ANS.1).

The server policy may include, for each directory, descriptions of an information using method (disclosed/not disclosed to outside, internal uses of information) and a trouble solving procedure (arbitrating organization) at occurrence of troubles. Contents of the descriptions are standardized in the privacy preferences project (P3P) of the world wide web consortium (W3C).

### 2.7 Ticket

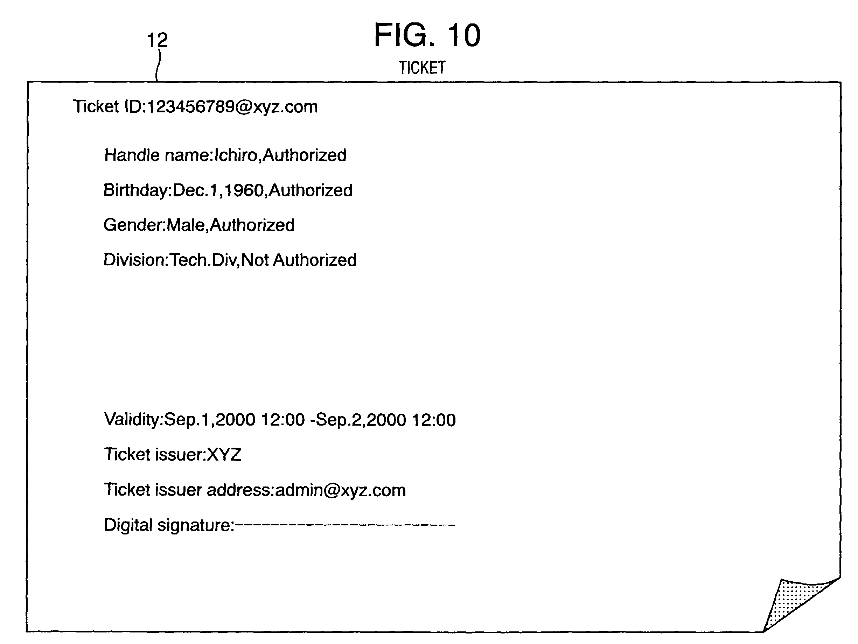

Fig. 10 shows a data layout of a ticket in embodiment 1 of the present invention.

The ticket is described in XML, ANS.1, or the like. The ticket includes data describing at least one personal information item and attribute information regarding the personal information item and a digital signature made on the data by a third party authority as the ticket issuer. The ticket also includes a unique ticket ID.

The ticket shown in Fig. 10 contains descriptions of a ticket ID, a handle name (authorized or not), a birth day (authorized or not), gender (authorized or not), a division to which the user belongs (authorized or not), a period of validity (date and time), a ticket issuer, a place to contact with ticket issuer, and a digital signature.

### 2.8 Access to WWW server

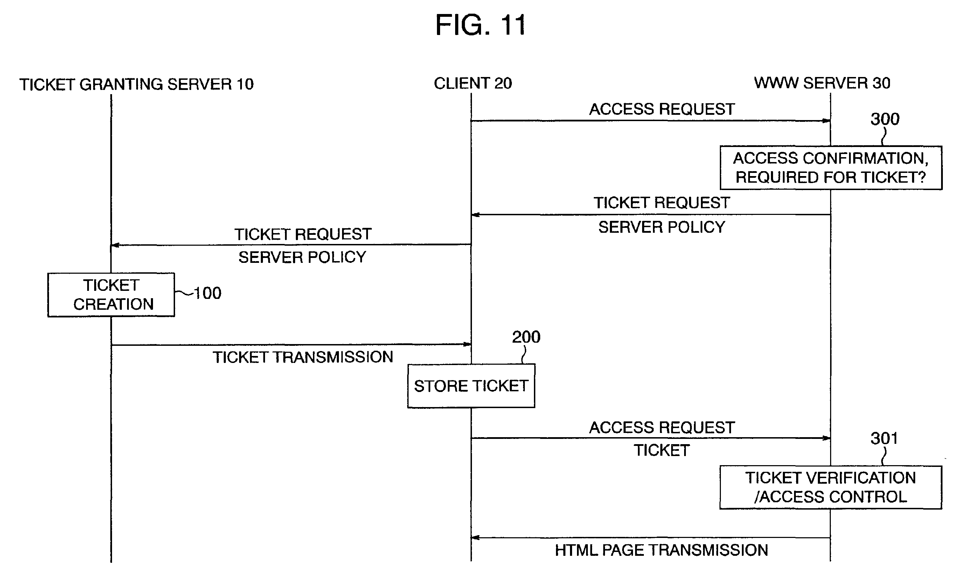

Fig. 11 is a sequential chart for a first access to the www server.

The access of Fig. 11 is conducted in almost the same procedure as for the access shown in Fig. 1.

First, in response to a user request, the client 20 issues an access request to the www server 30. Having received the access request, the www server 30 refers to an access target directory to determine whether or not a ticket is required (step 300) and sends a ticket request and a server policy to the client. In response thereto, the client 20 sends a ticket request to the ticket granting server 10 together with the server policy. The ticket granting server 10 creates a ticket (step 100) and sends the tickets to the client 20. The client 20 receives the ticket and stores the received ticket (step 200) and then sends an access request to the www server 30 together with the ticket. The www server 30 verifies the access request and conducts access control (step 301). If the access is allowed, the www server 30 sends an HTML page to the client 20; otherwise, the www server 30 sends an error message to the client 20.

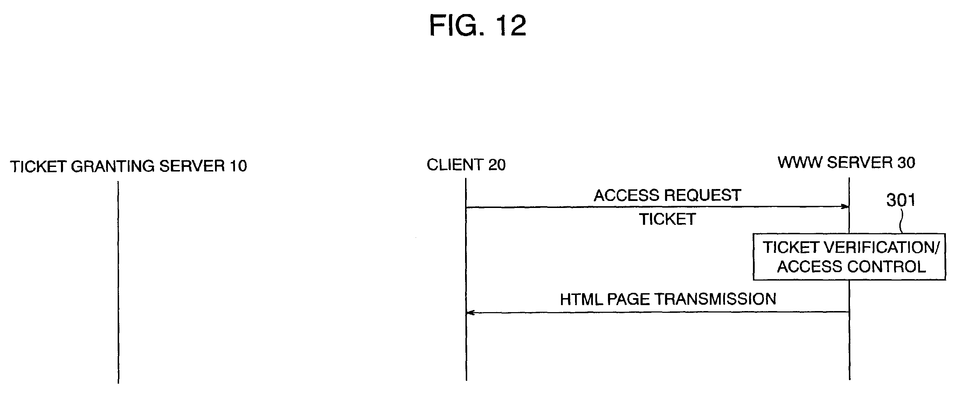

Fig. 12 shows a sequential chart of a second access to the www server.

Fig. 12 shows operations of the client 20 having kept the granted ticket. The client 20 sends an access request to the www server 30 together with the kept ticket. The www server 30 verifies the ticket and conducts access control (step 301). If the access is allowed, the www server 30 sends an HTML page to the client 20. If the period of validity of the kept ticket is expired, a ticket granting request is again sent to the ticket granting server 10.

In Figs. 11 and 12, communications between the clients 20 and the www server 30 and between the client 20 and the ticket granting server 10 are desirably conducted using the secure socket layer (SSL) to guarantee safety.

### 2.9 Processing of client

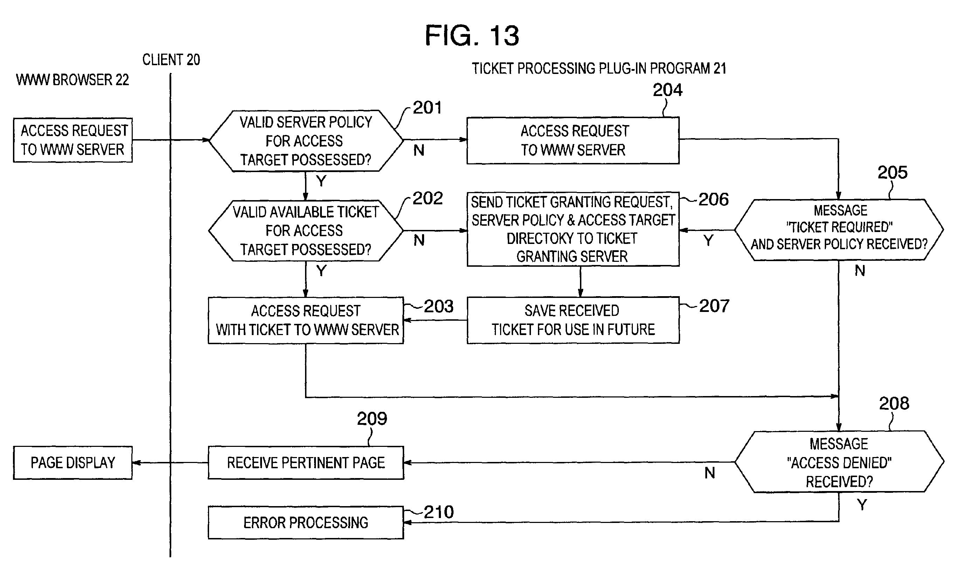

Fig. 13 shows a processing procedure of the client 20 in a flowchart.

In Fig. 13, the steps on the left side of a vertical line are executed by a general www browser 22 and those on the right side thereof are executed by the ticket processing plug-in program 21.

In response to a user, the www browser 22 sends an access request to the www server 30. The ticket processing plug-in program 21 refers to an access directory for the current access request and checks a ticket management table to determine whether or not there exists a server policy valid to the access target (step 201). If the server policy exists, the program 21 checks the ticket management table to determine whether or not there exists a valid ticket (step 202). If the ticket exists, the program 21 displays the server policy for the user. When the server policy includes any description for a use method of information, the program 21 displays the description for the user to obtain approval of the user. Thereafter, the program 21 sends an enquiry to the user for the transmission of the ticket to the www server 30 to obtain approval of the user. If the usage method and the ticket transmission are denied by the user, the program 21 stops the access processing. If allowed, the program 21 sends an access request to the www server 30 together with the ticket (step 203). If a message "access denied" is not received from the www server 30 (step 208), the program 21 receives the pertinent page (step 209) and passes the page to the www browser 22. The browser 22 then displays the page on the screen.

On the other hand, if there does not exist any valid server policy for the access target (No in step 201), the program 21 sends an access request to the www server 30 (step 204) and then receives therefrom a message "ticket required" and a server policy. The program 21 stores the directory and the server policy in the ticket management table (step 205).

When there does not exist any valid available ticket to the access target (step 202), the program 21 displays a server policy for the user to confirm whether or not the user requests the ticket granting. When the user request for the ticket granting is confirmed, the program 21 sends a ticket granting request to the ticket granting server 10 together with the server policy and the access target directory (step 206). Having received a ticket from the server 10, the program stores the ticket in the ticket management table for use in the future (step 207).

After obtaining the approval of the user again, the program 21 sends an access request to the www server 30 together with the ticket (step 203). If a message "access denied" is received from the www server 30 (step 208), the program 21 executes error processing (step 210).

In this connection, the ticket management table is a table which is referred to and updated by the ticket processing plug-in program 21. This table contains entries of, for example, a serial number, a directory name, a server policy (or a pointer to a server policy), a period of validity of the server policy, a ticket (or a pointer to a ticket), and a period of validity (or a day of granting) of the ticket.

### 2.10 Processing of WWW server

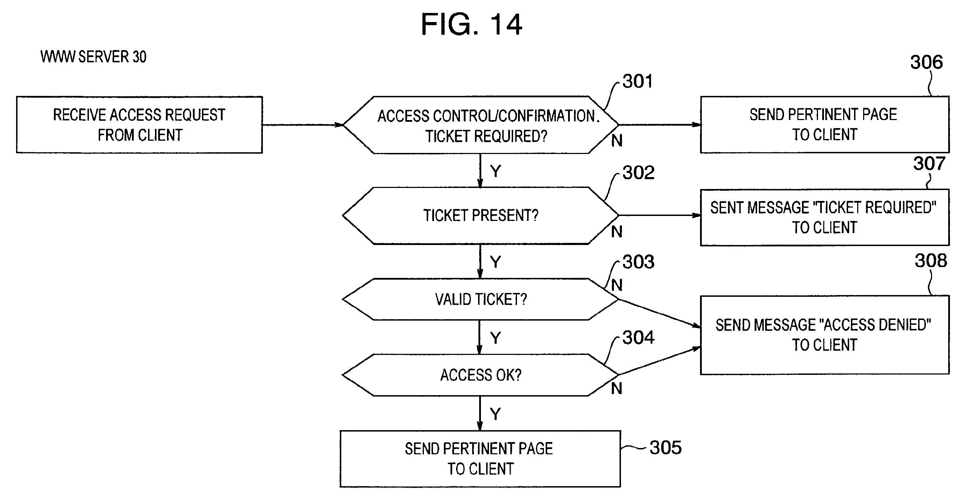

Fig. 14 is a processing flowchart of the ticket verification/access control program 32 of the www server 30.

Having received an access request from the client 20, the program 32 conducts access control/ confirmation and refers to the access directory and the serve policy 31 to determine whether or not a ticket is required for the access (step 301). If the ticket is required, the program 32 determines whether or not a ticket is attached to the access request (step 302). If the ticket is present, the program 32 checks a digital signature on the ticket, a ticket granting person (a signer), and a period of validity of the ticket to verify validity of the ticket (step 303). If the ticket is valid, the program 32 compares contents of the ticket with the server policy for the access directory. If the ticket matches with the server policy, the program 32 allows the access to the directory (step 304). Since the access is allowed, the program 32 sends a pertinent page to the client (step 305).

On the other hand, if it is found in the access control/confirmation that the ticket is not required (no in step 301), the program 32 sends a pertinent page to the client (step 306). If any ticket is not added to the request (step 302), the program 32 sends a message "ticket required" to the client (step 307). If the ticket is not valid or if the access is denied (steps 303 and 304), the program 32 sends a message "access denied" to the client (step 308).

### 2.11 Processing of ticket granting server

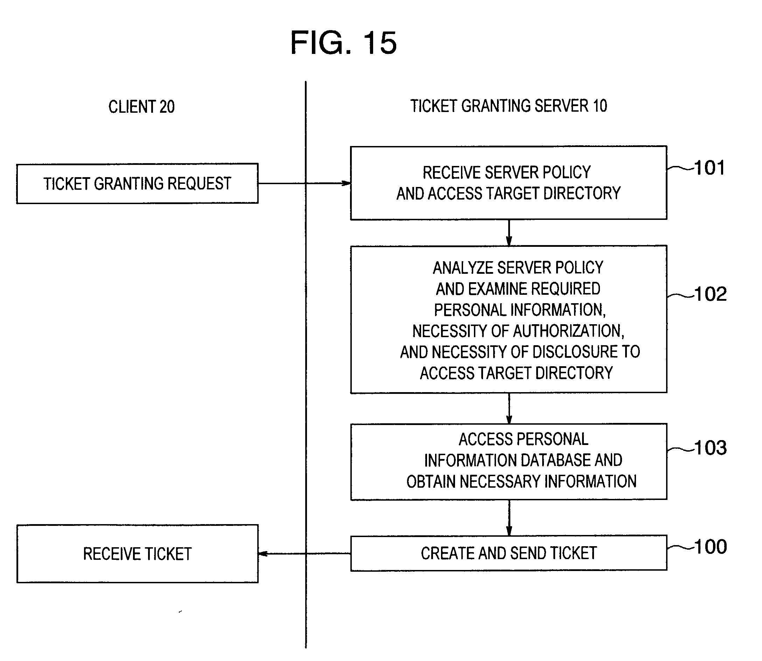

Fig. 15 is a processing flowchart of a ticket granting program 13 of the ticket granting server 10.

Having received a ticket granting request from a client, the ticket granting program 13 conducts identification and authentication of the requester. The identification and authentication is conducted in a method of prior art, for example, using a user ID, a password or biometrics. After the identification and authentication are finished, the program 13 receives a server policy and access target directory (step 101), analyzes the server policy, and determines personal information items necessary to access the target directory, necessity of authorization of each item, and necessity of disclosure of each item (step 102). The program 13 accesses the personal information database 11 to obtain necessary information items (step 103). The program 13 creates a ticket using the obtained information (step 100) and sends the ticket to the client.

The program 13 may save a log of ticket granting operations to conduct a charging operation for the ticket requester.

### 3. Embodiment 2

Description will primarily given of different points of embodiment 2 when compared with embodiment 1.

### 3.1 Ticket

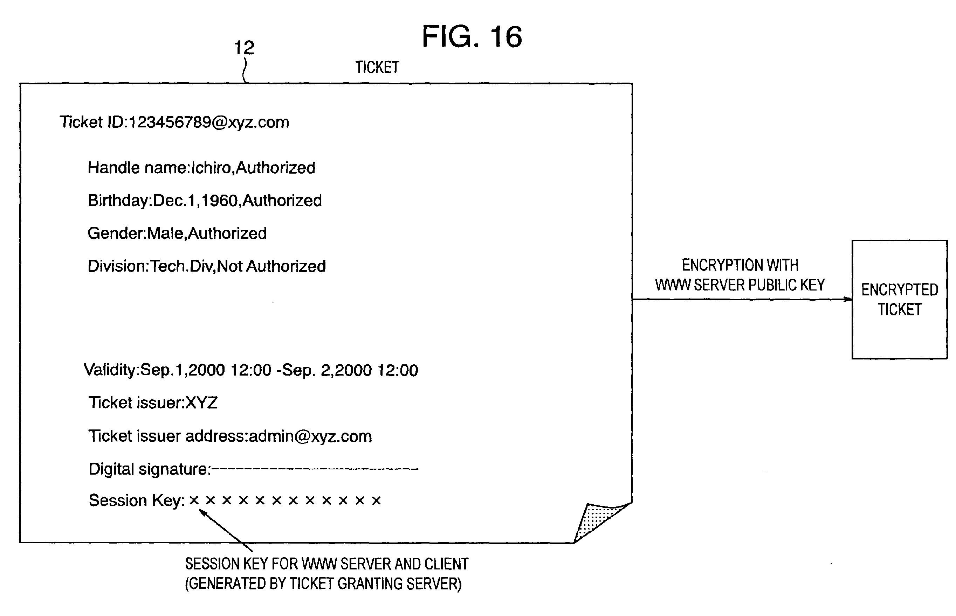

Fig. 16 shows a data layout of a ticket showing embodiment 2 of the present invention.

Embodiment 2 is characterized in that ① the entire contents of the ticket are encrypted with a public key of WWW server to be sent on the network, ② a session key shared by the www server and the client is described on the ticket, ③ the ticket granting server sends the session key to the client, ④ the client receives the session key and creates an authenticator using the session key, ⑤ an access request is sent to the www server together with the encrypted ticket and the authenticator, and ⑥ the www server obtains the session key from the ticket, decrypts the authenticator using the session key, and verifies whether or not the requester is actually the pertinent person. The verification for the access is more severe in embodiment 2 than in embodiment 1.

As shown in Fig. 16, the contents of the ticket of embodiment 2 additionally include the session key when compared with that of embodiment 1. That is, the ticket granting server creates the session key to be shared between the www server and the client and encrypts the contents of the ticket using a public key of the www server. The encrypted ticket is sent to the client.

### 3.2 Authenticator

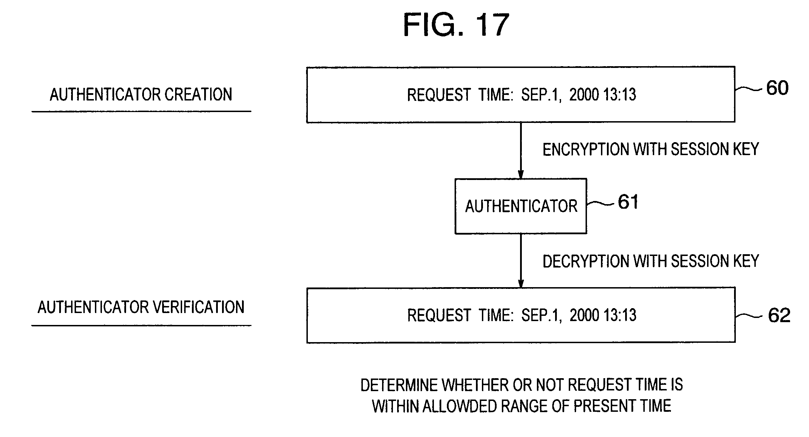

Fig. 17 is a diagram to explain a method of creating and verifying an authenticator shown in embodiment 2.

Embodiment 2 requires an authenticator, which is used to prove the authorized possessor of the ticket.

Embodiment 2 includes a procedure of illegal ticket use prevention in addition to those of embodiment 1. For the illegal ticket use prevention procedure, a known technique Kerberos is used. That is, when the method of embodiment 1 is used, there exists a fear of impersonation as follows. If a malicious person monitors communications between a client and a www server and sends later the monitored data to the www server, the malicious person can access the www server as the authorized client. To prevent the impersonation, the technique of Kerberos uses in general a method in which a point of time when an access is requested is encrypted using a session key.

As shown in Fig. 17, in the creation of an authenticator, a request time, for example, September 1, 2000 13:13 is encrypted using a session key to create an authenticator.

Next, to verify the authenticator, the www server decrypts the authenticator using the same session key to obtain the request time 62: September 1, 2000 13:13. The www server then determines whether or not the request time is within an allowed range (for example, one minute) of the current time. If the request time is within an allowed range, the www server determines whether or not another authenticator with the same request time has been received within the same range of time. By the operation, the www can prevent an event that a third person illegally transmits again the same authenticator. Even when an unauthorized person sends an access request to the www server using an authenticator sent from an authorized client, the authenticator has the access time previously accessed by the authorized person. Consequently, if it is found as a result of verification that the request time is beyond the allowed range, the access request is regarded as illegal.

The www server need only store the past authenticators which are within the allowed range.

Those who can create and verify an authenticator are those who know the session key, namely, the authorized client and the authorized www server. Any other persons or systems cannot create or verify the authenticator.

### 3.3 Access to WWW server

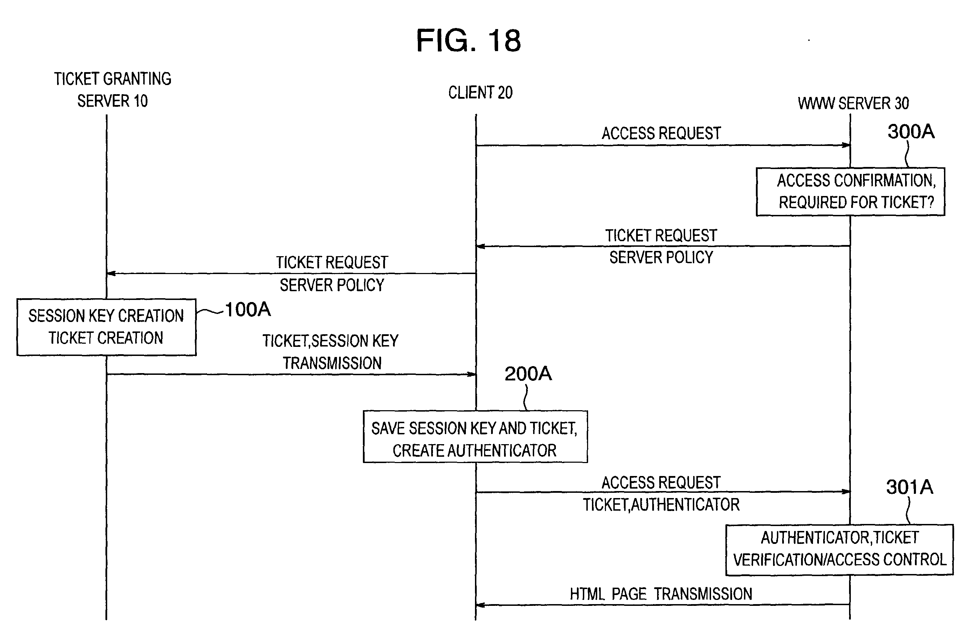

Fig. 18 is a sequential chart of a first access to the www server in embodiment 2.

The client 20 sends an access request to the www server 30. The www server 30 confirms the access and determines whether or not a ticket is required (step 300A). The www server 30 sends a ticket request and a server policy to the client 20. The client sends the ticket request and the server policy to the ticket granting serve 10. Processing up to this point is the same as that of embodiment 1. The ticket granting server 10 creates a session key and a ticket (step 100A). The ticket granting server 10 then sends the created ticket and the created session key to the client 20. The client 20 saves the session key and the ticket and creates an authenticator using the session key (step 200A). The client 20 sends an access request to the www server 30 together with the ticket and the authenticator. The www serve 30 verifies the authenticator and the ticket and conducts verification and access control (step 301A). When the access is allowed as a result of verification, the www server 30 sends an HTML page to the client 20.

### 3.4 Processing of client

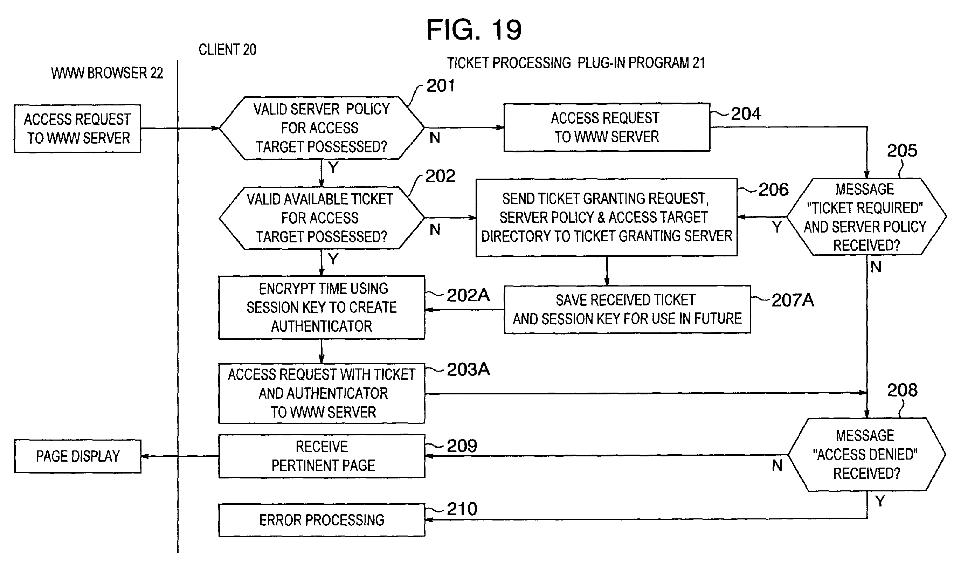

Fig. 19 is a processing flowchart of the client 20 in embodiment 2 of the present invention.

When the www browser 22 issues an access request to the www server 30, the ticket processing plug-in program 21 determines whether or not a valid server policy for the access target is possessed (step 201). If the server policy is possessed, the program 21 determines whether or not a valid available ticket for the access target is possessed (step 202). If the policy and the ticket are possessed, the program 21 encrypts the pertinent time using the session key to create an authenticator (step 202A). The program 21 sends an access request to the www server 30 together with the encrypted ticket and the authenticator (step 203A). If a message "access denied" is not received from the www server 30 (step 208), the program 21 receives a pertinent page (step 209). The program 21 sends the page to the www browser 22. The browser 22 displays the page on its screen.

On the other hand, if the valid available server policy is not possessed (step 201), the program 21 sends an access request to the www server 30 (step 204) and then receives a message "ticket required" and a server policy therefrom (step 205). If the valid available ticket is not possessed (step 202), the program 21 sends a ticket granting request, a server policy, and an access target directory to the ticket granting server 10 (step 206). The program receives a ticket and a session key from the ticket granting server 10 and saves the ticket and the session key for use in the future (step 207A). The program 21 encrypts the current time using the session key to create an authenticator (step 202A). The program 21 sends an access request to the www server 30 together with the encrypted ticket and the authenticator (step 203A). If a message "access denied" is received (step 208), the program executes error processing (step 210).

### 3.5 Processing of www server

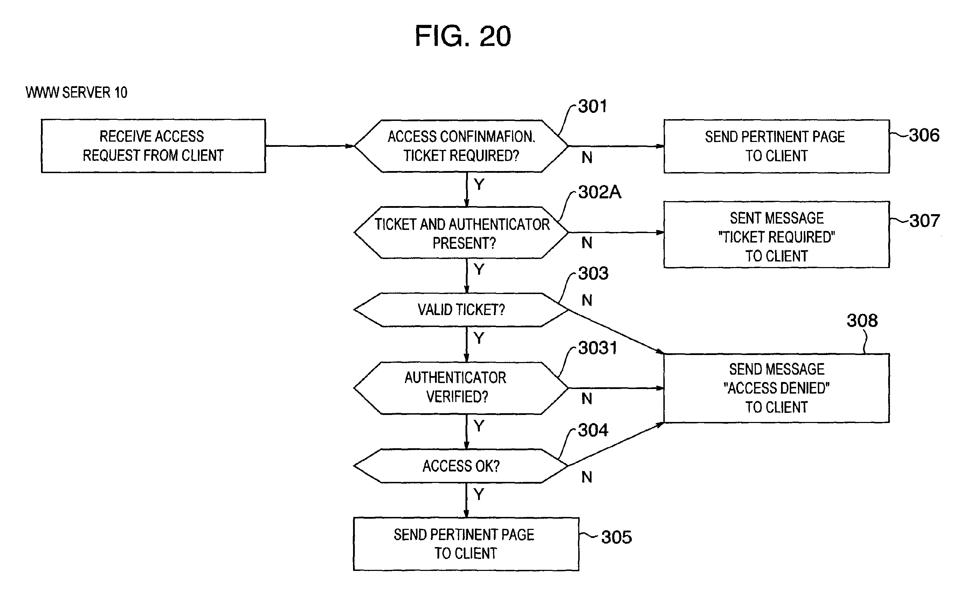

Fig. 20 is a flowchart showing processing of the www server 30 in embodiment 2 of the present invention.

Having received an access request from the client 20, the ticket verification/access control program 32 of the www server 30 confirms access control and determines whether or not a ticket is required (step 301). If the ticket is required, the program 32 determines whether or not a ticket and an authenticator are attached to the request (step 302). If they are attached thereto, the program 32 determines whether or not the ticket is valid (step 303). If the ticket is valid, the program determines whether or not verification of the authenticator is OK (step 3031). The verification results in that the authenticator is within the allowed range, the program determines whether or not the access is allowed, namely, whether or not the ticket satisfies the server policy (step 304). If satisfies, the program sends a pertinent page to the client 20 (step 305).

On the other hand, if the ticket is not required (step 301), the program 32 sends the pertinent page to the client (step 306). If the ticket and the authenticator are not attached to the request (step 302A), the program sends a message "ticket required" to the client 20 (step 307). If the ticket is other than an authorized valid ticket, the verification of the authenticator results in "No", or the access is not allowed, i.e. the server policy is not satisfied (steps 303, 3031, and 304), the program 32 sends a message "access denied" to the client 20 (step 308).

### 3.6 Processing of ticket granting server

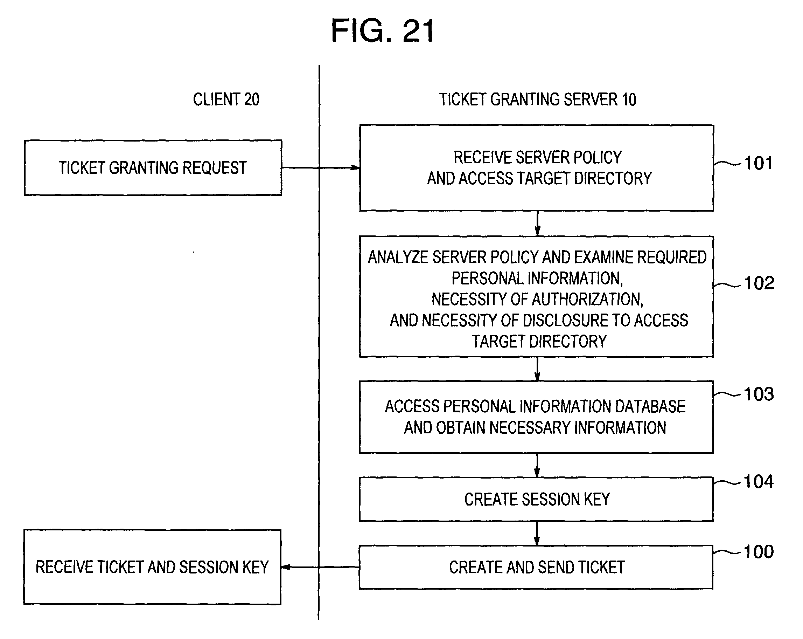

Fig. 21 is a processing flowchart of the ticket granting server 10 in embodiment 2 of the present invention.

Having received a ticket granting request from the www client 20, the ticket granting program 13 of the ticket granting server 10 receives a server policy and an access target directory attached to the ticket granting request (step 101). Next, the program 13 analyzes the service policy and examines personal information items, necessity of authorization of each item, and necessity of disclosure of each item to access the target directory (step 102). The program 13 then accesses the personal information database to obtain necessary information items (step 103), creates a session key (step 104), and creates a ticket (step 100). The program 13 sends the created ticket and the created session key to the client 20.

### 3.7 Detailed flow of embodiment 2

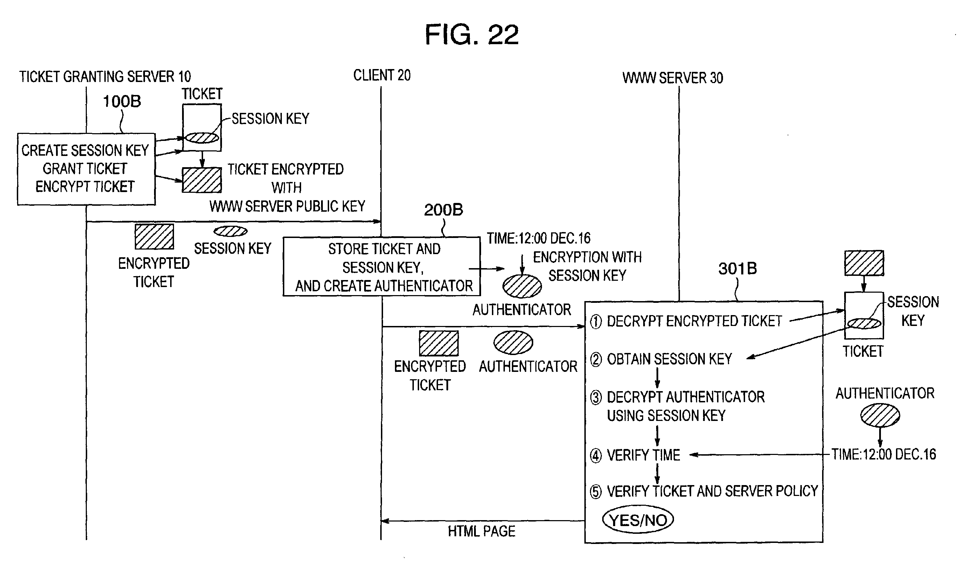

Fig. 22 is a detailed flowchart of embodiment 2 of the present invention.

Having received a ticket granting request from the client 20, the ticket granting server 10 creates a session key, creates a ticket, describes the created session key on the ticket, and encrypts the ticket using a public key of the www server 30-(step 100B). The server 10 sends the encrypted ticket and the created session key to the client 20.

The client 20 receives and saves the ticket and the session key and encrypts the current time using the session key to create an authenticator (step 200B). The client 20 sends an access request with the encrypted ticket and the created authenticator to the www server 30.

Having received the access request, the www server 30 decrypts the encrypted ticket and obtains the session key from the ticket. The server 30 decrypts the authenticator using the session key to obtain the time. The server 30 verifies the time. If the time is within an allowed range (for example, one minute) of the reception time, the serve 30 determines the sender is an authorized client. The serve 30 verifies the ticket and the server policy. If the verification results in "OK", the server 30 allows the access.

If the access is allowed, the server 30 sends an HTML page to the client 20.

If the access is not allowed, the server 30 sends a message "access denied" to the client 20. The client 20 then executes error processing.

In the operation, the communication between the ticket granting server 10 and the client 20 is favorably conducted using SSL.

### 3.8 Another example of authenticator

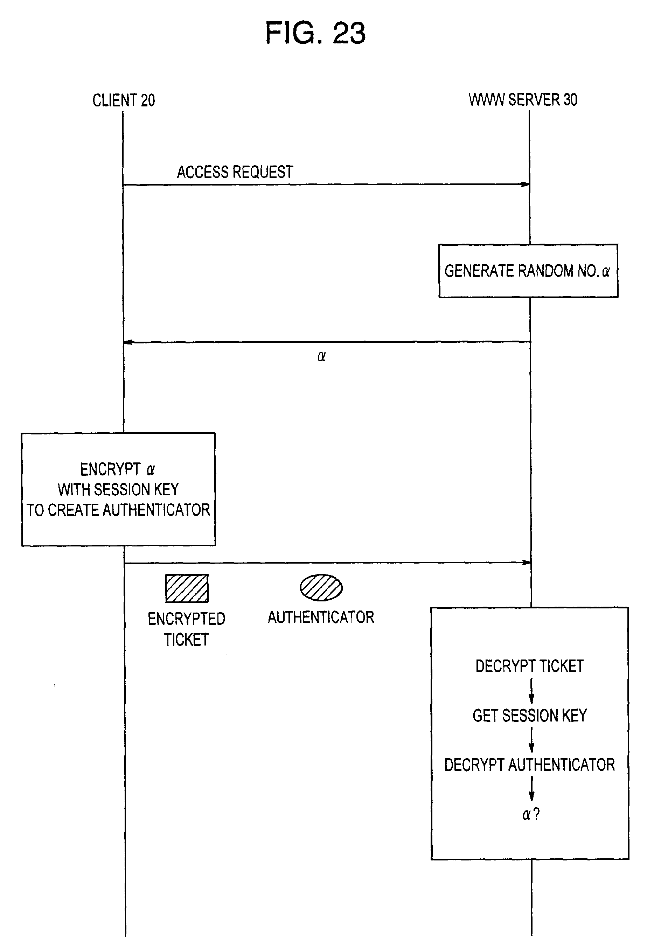

Fig. 23 shows a processing flow between a client and a www server in an example in which another authenticator is used. Description will be given only different points between Fig. 22 and Fig. 23.

In Fig. 23, when an access request is received from the client 20, the www server 30 generates a random number α and sends the random number to the client 20. The client 20 encrypts the random number α using the session key to create an authenticator. The client 20 sends an encrypted ticket and the authenticator to the www server 30. The www server 30 decrypts the ticket to obtain the session key. The server 30 decrypts the authenticator using the session key. If the decryption results in the random number α, the server 30 determines that the access requester is confirmed and compares the ticket with the server policy to allow the access.

### 4. Programs

The ticket processing plug-in program 21, the ticket granting program 13, and the ticket verification/access control program 32 are software programs. These programs can be distributed by a recording medium such as a CD-ROM or can be distributed through the down-loading thereof via the network.

### 5. Modifications

Description will be given of modifications of the embodiments.

In the embodiments, the ticket granting operation is contained in a sequence of processing to access the www server. However, it is also possible that only the ticket granting request and the ticket granting are conducted as independent procedures separated from the access to the www server.

Although the ticket processing plug-in program 21 of the client contains a user interface, the position to obtain confirmation and approval of the user may be changed and the number of such operations may also be changed.

In the embodiments, the server policy is determined for each server. However, the server policy may be determined for each directory.

In the embodiments, the server policy is sent in response to the access request. However, the server policy may be disclosed regardless of the access request. The server policy may also be down-loaded in response to a request from the client regardless of the access request.

The specification and drawings are, accordingly, to be regarded in an illustrative rather than a restrictive sense. It will, however, be evident that various modifications and changes may be made thereto without departing from the broader spirit and scope of the invention as set forth in the claims.

## Claims

1. A system to control access from a client (20) to a server, comprising:
a ticket granting server (10) including a personal information database (11) for obtaining, in response to a request from a client, personal information from the personal information database, for authenticating the personal information, and for resultantly sending a ticket (12) to the client; and
an access control server (30) including a server policy (31) defining an access allowance condition for requiring of the access requesting client a ticket matching the server policy and for allowing the client an access when the required ticket is sent from the client.

2. An access control system according to claim 1, wherein the access allowance condition includes necessary information, necessity/non-necessity of authorization of the information, and necessity/non-necessity of disclosure of the information.

3. An access control system according to claim 1, wherein the ticket includes at least one personal information item, attribute information of the personal information item, information of a ticket granter, and a digital signature of the ticket granter.

4. An access control method for use in a system including a client (20), a www server (30), and a ticket granting server (10), comprising the steps of:
sending by the www server having a server policy (31) defining an access allowance condition a server policy to a client having requested an access;
obtaining by the ticket granting server, in response to a request and the server policy sent from a client, personal information from a personal information database (11), authenticating the personal information, and resultantly sending a ticket (12) to the client;
sending by the client an access request with the ticket to the www server; and
allowing by the www server the client the access when the ticket matches the server policy.

5. A method of controlling an access from a client (20), comprising the steps of:
setting a server policy (31) defining an access allowance condition;
requiring of the access requesting client an authenticated ticket (12) matching the server policy; and
allowing the client an access when the required ticket is sent from the client.

6. An access control method according to claim 5, wherein the access allowance condition includes necessary information, necessity/non-necessity of authorization of the information, and necessity/non-necessity of disclosure of the information.

7. A personal information authentication method, comprising the steps of:
preparing a personal information database (11) including personal information;
identifying, in response to a request from a client (20), a person and authenticating the person;
obtaining requested information from the personal information database corresponding to the identified and authenticated person and describing the requested information on a certificate (12);
putting a digital signature on the certificate; and
sending the certificate to the client (20).

8. An authentication method according to claim 7, wherein the request from the client includes necessary information, necessity/non-necessity of authorization of the information, and necessity/non-necessity of disclosure of the information.

9. An authentication method according to claim 8, further comprising the step of confirming, when it is not necessary to disclose the information requested by the client, information in the personal information database and describing none of contents of the information on the certificate.

10. A server access method, comprising the steps of:
receiving from an access target server (30) a server policy (31) defining an access allowance condition;
sending to a ticket granting server (10) a ticket granting request together with the server policy;
receiving from the ticket granting server a ticket (12) including information which matches the server policy and which is authorized; and
sending an access request to the access target server together with the ticket.

11. An access control method for use in a system including a client (20), a www server (30), and a ticket granting server (10), comprising the steps of:
by the ticket granting server, receiving a ticket granting request from the client and creating in response thereto a session key, obtaining personal information from a personal information database (11), and sending to the client the session key and an encrypted ticket including the session key and the personal information;
by the client, creating an authenticator by encrypting an access request time using the session key received from the ticket granting server and sending to the www server an access request together with the encrypted ticket and the authenticator; and
by the www server, decrypting the encrypted ticket to obtain a session key, decrypting the authenticator using the session key to obtain a time, verifying the time, determining whether or not the ticket satisfies an access allowance condition (31), and determining allowance or denial of the access.

12. A www server (30), comprising:
means for setting a server policy (31) defining an access allowance condition;
means for sending the server policy to a client requesting an access; and
means for allowing a client (20) an access when a ticket matching the server policy is sent from the client.

13. A ticket granting server (10), comprising:
a personal information database (11) including personal information;
means for identifying, in response to a request from a client (20), a person and authenticating the person;
means for obtaining requested information from information corresponding to the identified and authenticated person in the personal information database, putting a digital signature, and thereby creating a ticket; and
means for sending the ticket (12) to the client.

14. A client (20), comprising:
means for receiving a server policy (31) defining an access allowance condition from an access target server (30);
means for sending a ticket granting request to a ticket granting server (10) together with the server policy;
means for receiving from the ticket granting server a ticket (12) including information which matches the server policy and which is authorized; and
means for sending an access request to the access target server together with the ticket.

15. A program for controlling an access from a client (20), said program including instructions for executing the steps of:
sending, to a client requesting an access, a server policy (31) to which an access allowance condition is beforehand set; and
allowing the client the access when a ticket (12) matching the server policy is sent from the client.

16. A personal information authentication program including instructions for executing the steps of:
identifying, in response to a request from a client (20), a person and authenticating the person;
obtaining requested information from information corresponding to the identified and authenticated person in a personal information database (11) and describing the requested information on a certificate (12);
putting a digital signature on the certificate; and
sending the certificate to the client.

17. A server access program including instructions for executing the steps of:
receiving from an access target server (30) a server policy (31) defining an access allowance condition;
sending to a ticket granting server (10) a ticket granting request together with the server policy;
receiving from the ticket granting server a ticket (12) including information which matches the server policy and which is authenticated; and
sending an access request to the access target server together with the ticket.
